# EUROPEAN PATENT APPLICATION

(11) **EP 1 707 484 A1**
(43) Date of publication of application: **04.10.2006**
(21) Application number: 04807173.2
(22) Date of filing: 16.12.2004
(51) Int. Cl.: B62M 23/02, B62M 7/02, B62K 11/00, B62K 11/04, B62K 11/10

(54) **MOTOR-DRIVEN VEHICLE**

(30) Priority: 25.12.2003 JP 2003431327
(71) Applicant: YAMAHA HATSUDOKI KABUSHIKI KAISHA, Iwata-shi, Shizuoka 438-8501 (JP)
(72) Inventor: SAITOU, Tetsushi Yamaha Hatsudoki K.K., Shizuoka-ken 438-8501 (JP)
(74) Representative: Grünecker, Kinkeldey, Stockmair & Schwanhäusser Anwaltssozietät
(86) International application number: PCT/JP2004/018814
(87) International publication number: WO 2005/063559

(57) **Abstract**

An electric vehicle 100 is provided with a power unit 200 that integrally has an engine 210 with a crankshaft 213 extending along the vehicle' s longitudinal direction, and a generator 250. The generator 250 is directly joined to the crankshaft 213 to produce electric power by means of the rotation of the crankshaft 213. The generator 250 supplies the electric power to a motor 150 rotating a rear wheel 140. Also, the electric vehicle 100 is provided with a pair of pillar members 115a disposed on both outer sides of the power unit 200 in the vehicle's transverse direction. The pair of pillar members 115a support the power unit 200 at the position of a bolt hole 1154 provided at the higher position than the crankshaft 213, and at the position of a bolt hole 1156 provided at the lower position than the crankshaft 213. The line connecting the bolt holes 1154 and 1156 runs generally perpendicular to the crankshaft 213.

## Description

### ELECTRIC VEHICLE

### [Field of the Invention]

The present invention relates to an electric vehicle in which electric power generated by use of an engine is supplied to a motor that drives a driving wheel of the vehicle.

### [Background Art]

Traditionally, a vehicle that rotates its driving wheel by means of an engine, such as a motorcycle and an automobile (engine-driven vehicle), is well known as a typical self-propelled vehicle. As the environmental concerns draw more attention in recent years, so-called hybrid vehicles, equipped with both an engine and a motor to rotate the driving wheel by the motor, are contemplated to reduce the environmental pollutant emitted from the engine-driven vehicle as much as practicable.

The contemplated hybrid vehicles include, for instance, a parallel-hybrid type vehicle in which both the engine and the motor mounted on the vehicle are utilized to rotate the driving wheel, and a series-hybrid type vehicle in which a generator is driven by the engine mounted on the vehicle, and the electric power produced by the generator is supplied to the motor, which independently rotates the driving wheel.

By the way, in the case of engine-driven vehicle, the rotational speed of the engine varies widely. Namely, the rotational speed of a crankshaft corresponding to the opening and closing of the throttle lever varies widely. The varying rotational speed of the crankshaft results in the generation of pitching, that is the vibration in the vehicle' s longitudinal direction, and the generation of rolling, that is the vibration due to the rotation of the engine along the vehicle's transverse cross section. Then, such vibration is transmitted to the whole vehicle.

Typically, a vehicle conceived for restricting the pitching is such that the crankshaft is disposed in the direction perpendicular to the vehicle's longitudinal direction (hereinafter referred to as "vehicle's transverse direction") as the engine is mounted to the vehicle body.

One example of the series-hybrid type vehicle having the engine mounted this way can be found in Patent Document (See FIG. 12 of JP-A-2001-106159).

Specifically, the electric motorcycle shown in this Patent Document has a motor for rotating the driving wheel, a battery for supplying electric power to the motor, and the generator driven by an engine for charging the battery with the electric power. In addition, the engine plays a role of assisting the motor that rotates the driving wheel.

In this vehicle, the engine and the generator are disposed in piles in the vehicle' s vertical direction in the space between the seat pillar and the fender of the driving wheel. In addition, a rotating shaft (crankshaft) of the engine and a rotating shaft (rotor shaft) of the generator extend along the vehicle's transverse direction, and are disposed in parallel with each other. Further, a transmission mechanism, disposed on either of the outer sides of the engine and the generator in the vehicle's transverse direction, transfers the rotational driving force generated by the engine to the generator.

In the electric motorcycle described above, the dimension of the vehicle body in its transverse direction becomes larger than the crankshaft and the rotor shaft length, because the crankshaft and the rotor shaft are disposed along the vehicle's transverse direction. Further, since the heavy engine and generator are disposed vertically in piles, the vehicle' s center of gravity is elevated, resulting in the degraded driving stability of the electric motorcycle. As described above, the crankshaft and the rotor shaft disposed along the vehicle's transverse direction result in the undesirable appearance of the vehicle when the engine and the generator are mounted on a small vehicle, such as a motor scooter. Further, the requirement for a sufficient space to set out the engine and the generator vertically in piles limits the location for disposing the engine and the generator on the vehicle.

Another possibility will be a vehicle in which a crankshaft is disposed along the longitudinal direction of the body, and an engine is suspended from the backbone frame extending along the vehicle's longitudinal direction. In such vehicle, however, pitching and rolling can be generated corresponding to the varying rotational speed of the crankshaft.

The present invention has been made in light of the concerns described above. It is therefore an objective of the present invention to provide an electric vehicle that is equipped with the engine and the generator, while restricting the generation of pitching and rolling, and at the same time, being capable of reducing the dimension of the vehicle body in its transverse direction.

### Disclosure of the invention

The first characteristic of the present invention is that; an electric vehicle is provided with: a power unit (power unit 200) that integrally has an engine (engine 210) with a crankshaft (crankshaft 213) extending along the longitudinal direction of the vehicle body and a generator (generator 250) that shares the crankshaft with the engine for its rotation axis to supply the electric power generated by the rotation of the crankshaft to a motor (motor 150); and a pair of frame parts (pillar members 115a) disposed on both outer sides of the power unit in the vehicle's transverse direction, in which each frame part supports the power unit at the first supporting point (the position of a bolt hole 1154) located higher than the crankshaft, and at the second supporting point (the position of a bolt hole 1156) located lower than the crankshaft, and the line connecting the first and second supporting points runs generally perpendicular to the crankshaft.

Such characteristic allows the engine and the generator to be disposed in series in the longitudinal direction of the vehicle body, since the generator shares the crankshaft with the engine for its rotation axis (rotor shaft), and the crankshaft is disposed along the longitudinal direction of the vehicle body. Thus, the vertical dimension of the electric vehicle can be reduced in comparison with the case where the engine and the generator are disposed vertically in piles.

Accordingly, the undesirable appearance of the electric vehicle resulted from the additional vertical dimension of the electric vehicle can be avoided. Further, the driving stability of the electric vehicle is improved, since the vehicle's center of gravity can be lowered in comparison with the case where the engine and the generator are disposed vertically in piles. In addition, the dimension of the vehicle body in its transverse direction is reduced in comparison with the case where the crankshaft is disposed along the vehicle's transverse direction, and the operator can get on a saddle of the electric vehicle more easily.

What is more, as the power unit is supported by the pair of frame parts at the first and supporting points, the need for suspending the power unit from above with the frame, or the need for supporting the power unit from below with the frame is eliminated. Thus, the room above or below the power unit can be utilized more effectively. In other words, some other unit constituting the electric vehicle (an air cleaner, for instance) may be disposed above or below the power unit.

In addition, the pair of frame parts can support the power unit while effectively restricting the engine vibration caused by the rotation of the crankshaft, since each frame part has the first and second supporting points (two places on each frame, which makes four places in all) to support the power unit, and the line connecting the first and second supporting points runs generally perpendicular to the crankshaft.

Thus, the swaying of the power unit in the longitudinal direction (pitching), and the swinging of the power unit on the vehicle's transverse cross section (rolling) caused by the engine turning the crankshaft can be restricted.

The second characteristic of the present invention according to the first characteristic thereof is that; the distance between the first supporting point and the crankshaft is generally equal to the distance between the second supporting point and the crankshaft.

The third characteristic of the present invention according to the first characteristic thereof is that; each frame part has upright frame portion extending in the vehicle' s vertical direction (the main body of the pillar member 115a), and the first and second supporting points are located closely to the upright frame portion.

The fourth characteristic of the present invention according to the first characteristic thereof is that; the engine further has a cylinder (cylinder 224), and the cylinder is disposed closely to the first or second supporting point.

The fifth characteristic of the present invention according to the first characteristic thereof is that; the power unit further has a crankcase (crankcase 230) accommodating at least the crankshaft, and the frame part supports the upper end of the crankcase at the first supporting point, while supporting the lower end of the crankcase at the second supporting point.

The sixth characteristic of the present invention according to the first characteristic thereof is that; a seat is further provided for the operator of the electric vehicle to sit on (seat 120), and the seat is disposed on the upper part of the frame parts.

The seventh characteristic of the present invention according to the first characteristic thereof is that; the engine further has a cylinder head (cylinder head 215) on which an intake port (intake port 217) and an exhaust port (exhaust port 217) are provided, and the intake port and the exhaust port provided on the cylinder head are aligned in the vehicle's longitudinal direction.

As described above, according to the present invention, the electric vehicle equipped with the engine and the generator, and being capable of restricting the generation of pitching and rolling, and at the same time being capable of reducing the dimension of the vehicle body in its transverse direction can be provided.

### [Brief Description of Drawings]

FIG. 1 is a side view showing the structure of an electric vehicle 100 according to an embodiment of the present invention.
FIG. 2 is a perspective view showing the structure of an electric vehicle 100 according to an embodiment of the present invention.
FIG. 3 is a perspective view showing the electric vehicle 100 in FIG. 2 in such state that a frame cover 130 has been removed from the electric vehicle 100.
FIG. 4 is an enlarged perspective view showing a power unit 200 of the electric vehicle 100.
FIG. 5 is a side view showing the mounting condition of the power unit 200 of the electric vehicle 100.
FIG. 6 is a perspective view showing a frame 110 in such state that the power unit 200 has been removed from the electric vehicle 100.
FIG. 7 is a cross-sectional view of the power unit 200 when viewed from the right side.
FIG. 8 is a view of the power unit 200 when viewed from the front.

### [Best Mode for Carrying Out the Invention]

The subject matter of the present invention is to suitably dispose a power unit having an engine and a generator in a hybrid-type electric vehicle, on which the electric power is produced by a generator utilizing the torque generated by the engine, and the electric power is supplied to a motor for turning a driving wheel.

### (Structure of an electric vehicle according to an embodiment of the present invention)

Structure of an electric vehicle according to an embodiment of the present invention will be described in detail with reference to the drawings. In the descriptions of the following drawings, identical or similar reference numerals or symbols are used to denote identical or similar parts. It should be noted, however, that the drawings show typical configuration, and that they are different from the actual object in regard to the relative proportion between each dimension. Thus, the specific dimensions or the like shall be established taking account of the following explanation. It should be understood that some differences exist in relative dimensions and proportions between the drawings.

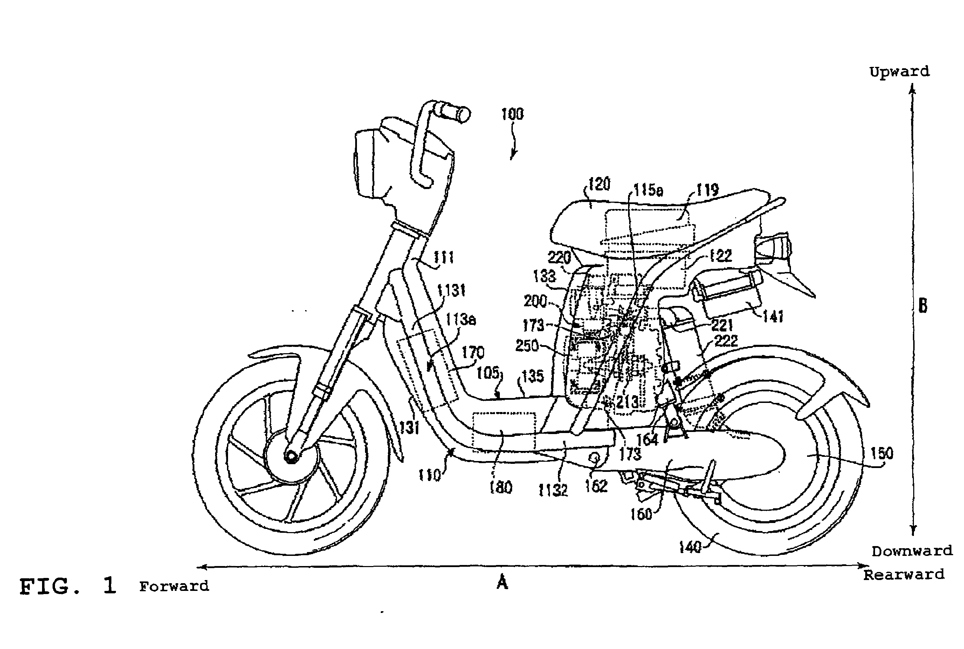

FIG. 1 is a side view showing the structure regarding the major part of an electric vehicle 100 according to an embodiment of the present invention. The longitudinal direction in the context of this embodiment refers to the direction "A" shown in FIG. 1, while the vertical direction refers to the direction "B" in FIG. 1.

As shown in FIG. 1, the electric vehicle 100 is a self-propelled electric motorcycle provided with; an underbone-type frame 110 (a handle post 111, a down tube 113, and a seat pillar 115), and a step floor 105. In the context of this embodiment, the electric vehicle refers to a motorcycle or a motor three-wheeler in which at least a part of the power for rotating the driving wheel is produced by a motor.

The electric vehicle 100 is provided with; a frame part 110, a seat 120, a frame cover 130 (including a front cover 131, a main body cover 133, and a step floor cover 135), a motor 150 for driving a rear wheel 140, a swing arm 160 to which the motor 150 is attached, a battery 170 connected to the motor 150, a control unit 180 for controlling the electric vehicle 100, and a power unit 200 having an engine 210 and a generator 250.

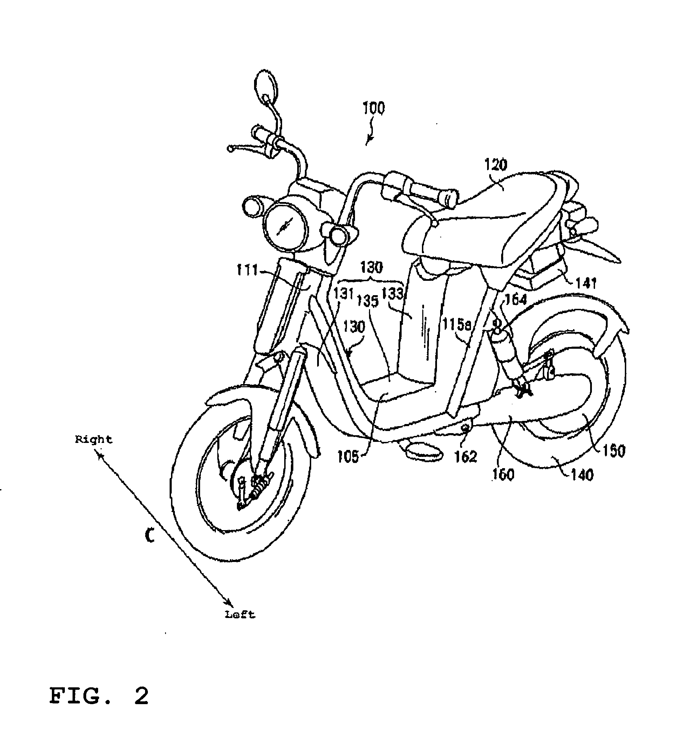

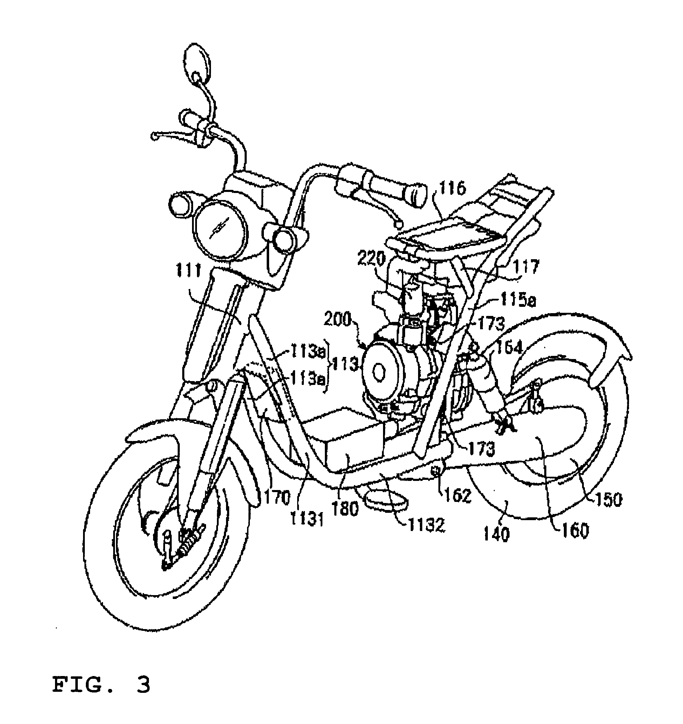

FIG. 2 is a perspective view showing the external appearance of the electric vehicle 100 according to an embodiment of the present invention. FIG. 3 is a perspective view showing the electric vehicle 100 in FIG. 2 in the state that the frame cover 130 has been removed from the electric vehicle 100. In the context of this embodiment, the vehicle's transverse direction refers to the direction "C" in FIG. 2. Further in FIG. 3, the electric vehicle 100 is in such state that the seat 120, a radiator 141, and so on are removed in addition to the frame cover 130.

As shown in FIGs. 1 through 3, the frame 110 has the handle post 111, the down tube 113, and the seat pillars 115. The handle post 111 is shaped to extend in the vertical direction of the vehicle.

The down tube 113 is composed of the pair of down tubes 113, each of them being disposed on each outer side of the battery 170 in the vehicle's transverse direction. Also, each of the down tubes 113a is composed of a front tube section 1131, the section extending from the handle post 111 toward the rear part of the vehicle body in the descending manner, and a rear tube section 1132, the section extending from the lower end of the front tube section1131 toward the rear part of the vehicle body.

The battery 170 is disposed between the pair of front tube sections 1131, and the front cover 131 is disposed on the outer side of the front tube sections 1131 in the vehicle's transverse direction. A pair of rear tube sections 1132 are arranged to pass nearly the height of the ground clearance of the vehicle. The step floor 105 is disposed above the rear tube section 1132.

The seat pillar 115 is composed of a pair of pillar members 115a disposed on each outer side of the power unit 2000 described above in the vehicle' s transverse direction. Each of the pillar members 115a is shaped to extend in the vertical direction of the vehicle, namely, it extends from the rear end part of the rear tube section 1132 toward the upper part of the vehicle body. Also, each pillar member 115a supports the seat 120 disposed on the upper part of each pillar member 115a. In addition, a radiator 141 is disposed in the rear below the seat 120.

The battery 170 is connected to the motor 150, the control unit 180, and the generator 250 via the distribution cable (not shown). For reference, the battery 170 is composed of nickel-metal hydride cell, nickel cadmium cell, or the like.

Additionally, the control unit 180 is disposed between the pair of rear tube sections 1132 (in the step floor area) and covered with the step floor cover 135. The control unit 180 is connected to the motor 150, the battery 170, the power unit 200, and throttle lever section (not shown) for electrically controlling the electric vehicle 100.

The forward end of the swing arm 160 is attached to a pivot shaft 162 disposed in the rear end part of the pair of rear tube sections 1132. The swing arm 160 is swingablly supported by the pivot shaft 162.

The rear end of the swing arm 160 is attached to the motor 150 and the rear wheel 140. The motor 150 and the rear wheel 140 are formed integrally as one part. In addition, a rear suspension 164 is provided to bridge across the longitudinally central part of the swing arm 160 and the pillar member 115a on the left side. In FIG. 1, only the lower end part is illustrated for the rear suspension 164, in order to simplify the description.

The rotation axis of the motor 150 and the axle of the rear wheel 140 are formed integrally to have a shape extending in the vehicle's transverse direction. The motor 150 may be mounted at any place so far as it is attached to the swing arm 160. For instance, it may be mounted in the longitudinally central part of the swing arm 160, or may be mounted in the forward end part of the swing arm 160.

In addition, the rotation axis of the motor 150 according to this embodiment is formed to extend in the vehicle's transverse direction to be integral with the axle of the rear wheel 140, but the present invention is not limited to such configuration. For instance, the rotation axis of the motor 150 may be formed to extend in the longitudinal direction, and connected to the axle of the rear wheel 140 via a gear that converts the torque around the rotation axis of the motor 150 into the torque around the axle of the rear wheel 140.

Further, the electric vehicle 100 according to this embodiment has a cantilever-type structure where the swing arm 160 is disposed on either side of the vehicle body in the transverse direction, but the present invention is not limited to such configuration. It may be a balance-type crossover structure where the swing arm 160 is disposed on both sides of the vehicle body aligned in the transverse direction. For instance, when the electric vehicle 100 has such balance-type crossover structure, a pair of swing arms 160 are disposed at the rear end part on the pair of rear tube sections 1132, and the pivot shaft 162 swingablly supports the pair of swing arms 160.

As described above, each of the pillar members 115a is shaped to extend in the vehicle's vertical direction from the rear end part on the pair of rear tube sections 1132. They oppose each other with the power unit 200 lying in between. Further, each of the pillar members 115a according to this embodiment is disposed slantingly toward the upper rear part of the vehicle from the rear end part on the pair of rear tube sections 1132.

The seat pillar 115 has the pair of pillar members 115a, the seat frame 116 joined to the upper end of the pair of pillar members 115a, and a supporting pipe member 117 bridging across the pair of pillar members 115a and the seat frame 116 to support the seat frame 116. Also, the seat frame 116 extends forward from the upper end part of the pair of pillar members 115a, having a "U" shape.

The seat 120, which the operator of the electric vehicle 100 sits on, is disposed on the seat frame 116, while a fuel tank 119 is disposed on the inside of the seat 120.

In addition, an air cleaner 122 is disposed in between the pair of pillar members 115a. The air cleaner 122 is located below the fuel tank 119. Further, the power unit 200 is disposed below the air cleaner 122. The power unit 200 is secured to the pair of pillar members 115a by means of a bolt 173.

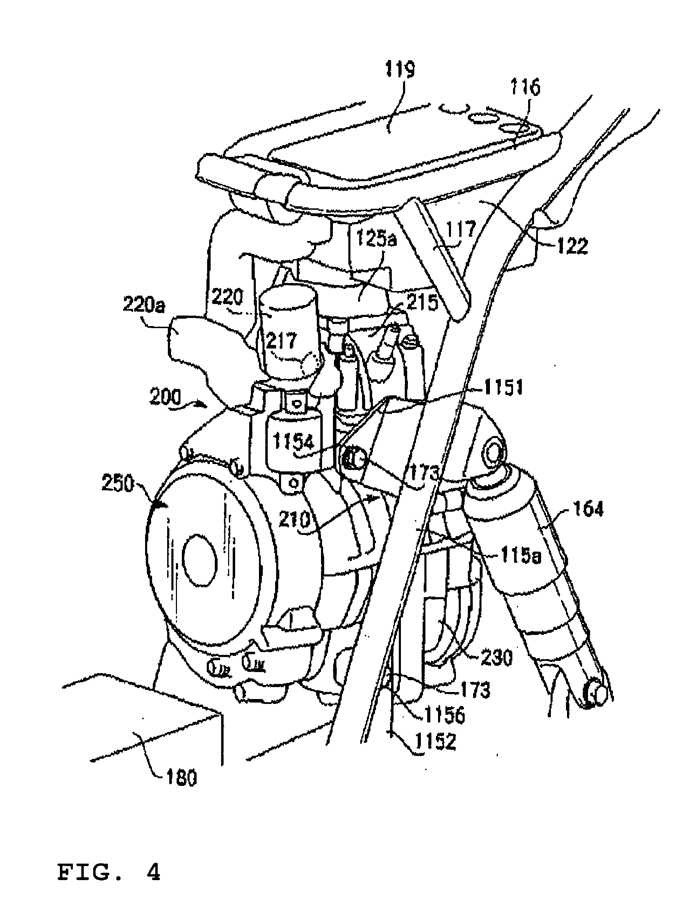

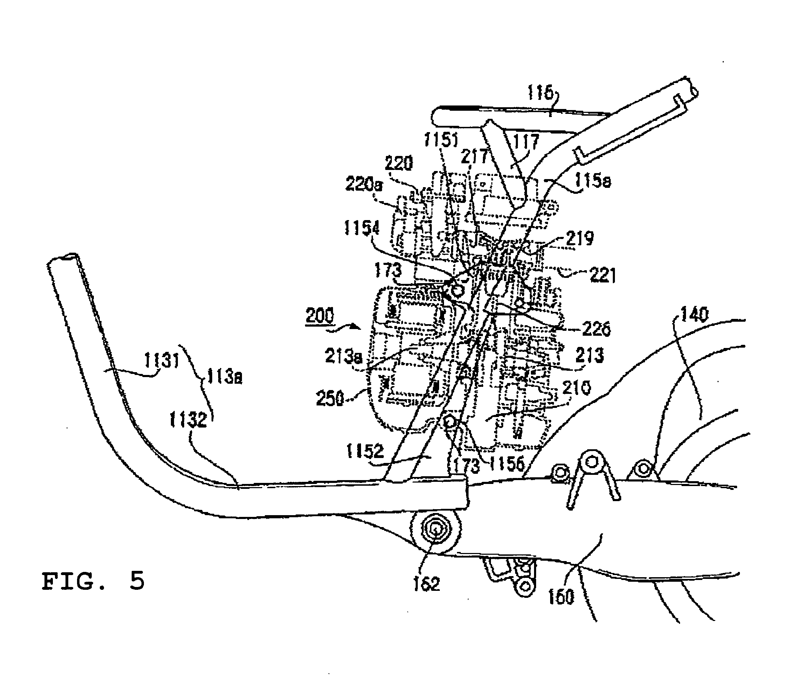

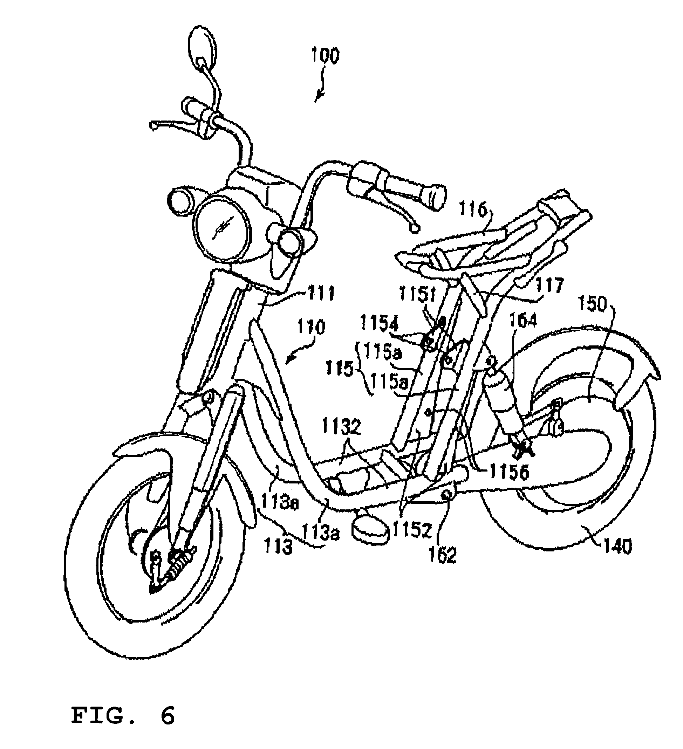

FIG. 4 is a perspective view showing the power unit 200, and FIG. 5 is a side view showing the power unit 200. FIG. 6 is a perspective view showing the frame 110 in such state that the power unit 200 is removed from the electric vehicle 100.

As shown in FIGs. 4 through 6, an upper rib 1151 is formed respectively on each of the pair of pillar members 115a at its upper part, having a shape protruding forward from each pillar member 115a, while a lower rib 1152 is formed respectively on each of the pair of pillar members 115a at its lower part, having a shape protruding rearward from each pillar member 115a.

The upper rib 1151 and the lower rib 1152 have a bolt hole 1154 and a bolt hole 1156, respectively, through which the bolt 173 mentioned above is inserted. In other words, by means of the bolt 173 being inserted through the bolt holes 1154 and 1156 respectively, the pair of pillar members 115a support the power unit 200 at the positions of the bolt holes 1154 and 1156. Further, the line connecting the bolt holes 1154 and 1156 (vertically extending line) runs generally perpendicular to the crankshaft 213. In addition, the distance between the bolt hole 1154 and the crankshaft 213 is generally equal to the distance between the bolt hole 1156 and the crankshaft 213.

At the same time, the bolt holes 1154 and 1156 are both located closely to the main body (the part excluding the upper rib 1151 and the lower rib 1152) of the pillar member 115a. More specifically, the bolt holes 1154 and 1156 are located closely to the pillar member 115a to the extent that the sufficient strength for supporting the power unit 200 can be assured when the bolt 173 is inserted through the bolt holes 1154 and 1156 respectively. Thus, the upper rib 1151 has a shape protruding forward from the pillar member 115a, with the maximum length of protrusion being limited to the extent that the strength for supporting the power unit 200 can be assured when the bolt 173 is inserted through the bolt hole 1154. In turn, the lower rib 1152 has a shape protruding rearward from the pillar member 115a, with the maximum length of protrusion being limited to the extent that the strength for supporting the power unit 200 can be assured when the bolt 173 is inserted through the bolt hole 1156.

The bolt holes 1154 and 1156 according to this embodiment are provided on the upper and lower ribs 1151 and 1152 respectively, but the present invention is not limited to such configuration. For instance, the bolt holes 1154 and 1156 may be provided on the pillar member 115a itself, so far as the line connecting the bolt holes 1154 and 1156 runs generally perpendicular to the crankshaft 213.

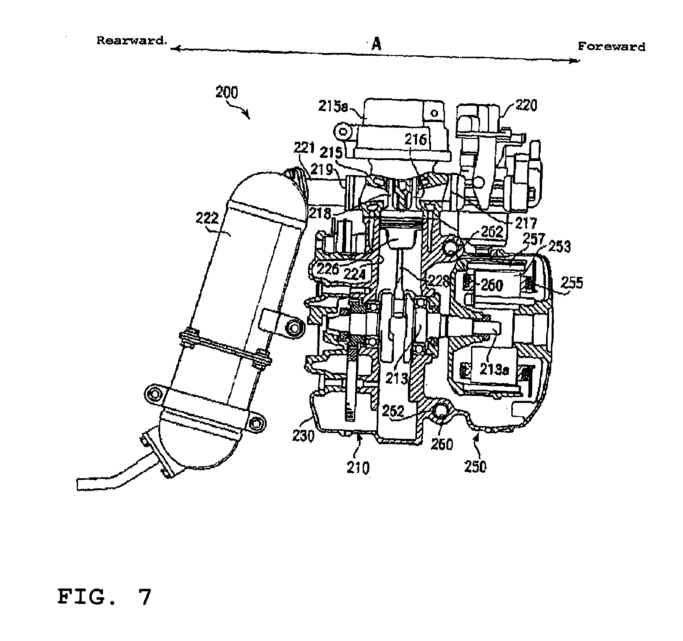

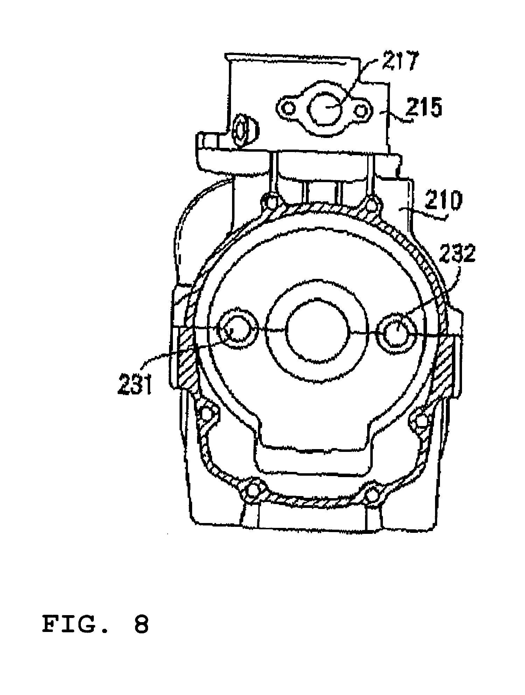

FIG. 7 is a cross-sectional view of the power unit 200 when viewed from the right side, and FIG. 8 is a view of the power unit 200 when viewed from the front. Part of the power unit 200 is broken away in FIG. 7, in order to indicate the major part inside the engine 210. As shown in FIG. 1, FIGs. 3 through 5, FIG. 7, and FIG. 8, the power unit 200 is composed of the engine 210 and the generator 250.

The rotation axis (rotor shaft) of the generator 250 is directly connected to the crankshaft 213 of the engine 210. Specifically, as described later, the forward section (front part 213a) of the crankshaft 213 acts as the rotor shaft of the generator 250. In other words, the engine 210 and the generator 250 are configured to share the rotation axis (crankshaft 213) which are formed integrally into one piece. "Share the rotation axis" means that the rotation axis of the engine 210 and the rotation axis of the generator 250 are formed integrally into one piece. Further, the generator 250 produces electric power utilizing the rotation of the crankshaft 213 to charge the battery 170 with the electric power.

As described above, the power unit 200 is disposed in between the pair of pillar members 115a so that the crankshaft 213 extends in the vehicle's longitudinal direction. Specifically, the power unit 200 has a recessed part (not shown) corresponding to the shape of the pair of pillar members 115a, and the recessed part on the power unit 200 is disposed along the pair of pillar members 115a. In addition, the recessed part of the power unit 200 is used to determine the correct mounting location of the power unit 200 relative to the pair of pillar members 115a, when the power unit 200 is mounted to the pair of pillar members 115a. Additionally, the power unit 200 is supported by the pair of pillar members 115a at the positions corresponding to the bolt holes 1154 and 1156, as the bolt 173 is inserted through the bolt holes 1154 and 1156 respectively.

The engine 210 is a two-valve, single-cylinder engine of the overhead valve type. The engine 210 has a crankcase 230, and a cylinder head 215 on top of the crankcase 230. The cylinder head 215 has an intake port 217 for the aspiration of air into a cylinder 224, and an intake valve 216 for opening and closing the intake port 217, an exhaust port 219 for the discharge of air from the cylinder 224, and an exhaust valve 218 for opening and closing the exhaust port 219.

The intake port 217 opens to the forward of the cylinder head 215. Opening/closing of the intake port is associated with the up/down movement of the intake valve 216. The exhaust port 219 opens to the rearward of the cylinder head 215. Opening/closing of the exhaust port is associated with the up/down movement of the exhaust valve 218.

As shown in FIGs. 4, 5, and 7, the intake port 217 is connected to a carburetor 220 disposed ahead of the intake port 217. Then, the carburetor 220 is connected to the air cleaner 122 by way of the intake pipe 220a. Also, the carburetor 220 is disposed generally in the central part of the engine 210 in the vehicle's transverse direction. Further, as shown in FIG. 7, the exhaust port 219 is connected to a muffler 222 by way of the exhaust pipe 221. The muffler 222 is disposed on the outer side of the rear wheel 140 in the vehicle's transverse direction, opposite to the rear suspension 164 with the rear wheel 140 lying in between.

The intake valve 216 and the exhaust valve 218 are disposed side by side in the vehicle's longitudinal direction. The intake port 217 and the exhaust port 219 are disposed in line along the vehicle's longitudinal direction (namely, they are disposed in the same orientation as the crankshaft 213.) Also, the intake valve 216 and the exhaust valve 218 are connected to the crankshaft 213, and configured to allow the up/down movement by means of a rocker arm (not shown). Thus, the intake valve 216 and the exhaust valve 218 are configured to open and close the intake port 217 and the exhaust port 219, respectively. In addition, the top of the cylinder head 215 is covered by the head cover 215a.

The cylinder 224 is shaped to extend vertically. A piston 226 and a connecting rod 228 are disposed inside of the cylinder 224. Specifically, the lower end of the piston 226 is joined to the upper end of the connecting rod 228. Also, the lower end of the connecting rod 228 is rotationally attached to the crankshaft 213. The crankshaft 213 is disposed in line with the vehicle's longitudinal direction. Also, the crankshaft 213 rotates as the vertical motion of the piston 226 is transferred to the crankshaft 213 by way of the connecting rod 228.

Further, as shown in FIG. 8, a countershaft 231 and another countershaft 232 are disposed on the outer side of the crankshaft 213 in the vehicle's transverse direction. The counter shaft 231 and the other counter shaft 232 are disposed along the vehicle's longitudinal direction (in other words, they are disposed in parallel with the crankshaft 213). The counter shaft 231 and the other counter shaft 232 are rotationally connected to the crankshaft 213 by way of a gear (not shown) to rotate in the opposite direction to the rotation direction of the crankshaft 213. Namely, the countershaft 231 and the other countershaft 232 rotate in the opposite direction to the rotation direction of the crankshaft 213 to cancel the force of inertia caused by the rotation of the crankshaft 213, and therefore to restrict rolling caused by the rotation of the crankshaft 213.

As shown in FIG. 7, the generator 250 is disposed ahead of the crankcase 230. The front part 213a of the crankshaft 213 protrudes into the generator 250 to serve as the rotor shaft of the generator 250. The generator 250 has; the front part 213a that is the rotor shaft, a stator 253 joined to the front part 213a, a coil 255 wound in the direction perpendicular to the rotation direction of the stator 253, a magnet 257 disposed on the outer side of the stator 253 in its radial direction. The magnet 257 is disposed separately from the stator 253. Further, the generator 250 produces electric power utilizing the torque of the crankshaft 213 to supply the battery 170 with the electric power.

The power unit 200 constructed as described above has a pair of bolt holes 260 in the positions corresponding to the bolt hole 1154 of the upper rib 1151 and the bolt hole 1156 of the lower rib 1152. In other words, the power unit 200 is supported by the pair of pillar members 115a at the positions of the bolt holes 1154 and 1156, as the bolt 173 is inserted through the bolt holes 1154 and 1156 respectively.

As referred to above, the line connecting the bolt holes 1154 and 1156 runs generally perpendicular to the crankshaft 213. Therefore, the line connecting the pair of bolt holes 260 provided in the positions corresponding to the bolt holes 1154 and 1156 also runs generally perpendicular to the crankshaft 213. In this regard, a tubiform rubber bush 262 is disposed in place on the inside of the bolt hole 260. In addition, the pair of bolt holes 260 are provided at the upper and lower ends of the crankcase 230, respectively. The bolt hole 260 penetrates through the crankcase 230 in the vehicle's transverse direction.

Here, the power unit 200 is supported by the pair of pillar members 115a at the positions corresponding to the pair of bolt holes 260 (namely, at the positions of bolt holes 1154 and 1156), as the bolt 173 is inserted through the rubber bush 262 of the bolt hole 260.

By the way, the center of gravity for the power unit 200 is located generally in the central part of the crankshaft 213 in the longitudinal direction. Thus, the pair of bolt holes 260 are disposed separately from the center of gravity of the power unit 200 (generally the central part of the crankshaft 213). Also, the pair of bolt holes 260 are disposed oppositely with center of gravity of the power unit 200 (generally the central part of the crankshaft 213) located in between.

The bolt 173 is inserted through each of the pair of bolt holes 260, and through each of the bolt holes 1154 and 1156 in the vehicle's transverse direction (namely, the direction perpendicular to the crankshaft 213). In other words, as the bolt 173 is inserted through each of the pair of bolt holes 260, and through each of the bolt holes 1154 and 1156, the pair of pillar members 115a support the power unit 200 in the orientation that the crankshaft 213 is disposed along the vehicle's longitudinal direction.

As referred to above, the electric vehicle 100 is configured in the manner that the generator 250 produces electric power as the engine 210 rotates the front part 213a of the crankshaft 213 (the rotor shaft of the generator 250). Also, the electric vehicle 100 supplies the battery 170 with the electric power produced by the generator 250 by way of a distribution cable (not shown). Further, the electric vehicle 100 supplies the motor 150 with the electric power stored in the battery 170 by way of the distribution cable (not shown).

In this process, the control unit 180 supplies motor 150 with the electric power (electric current) in compliance with the position of an unillustrated throttle lever section (namely, the speed desired by the operator), and the motor 150 rotates the rear wheel 140 (makes the electric vehicle 100 self-propelled) in accordance with the electric power supplied to the motor.

That is to say, the engine 210 in the electric vehicle 100 according to the present embodiment does not have the function to rotate the rear wheel 140 directly. It only has the function to make the generator 250 produce electric power. At the same time, the rear wheel 140 rotates only by the torque generated by the motor 150 applying the electric power produced by the generator 250. Therefore, in the electric vehicle 100 according to the present embodiment, the rotating speed of the engine 210 (crankshaft 213) is not affected by the opening and closing of the throttle lever section. Thus, the rotating speed of the engine 210 can be kept constant. Consequently, the rotating speed of the engine 210 can be maintained in the range of high combustion efficiency, even when the electric vehicle 100 is in the idling condition, or when it makes sudden acceleration. This in turn allows reduction of environmental pollutant generated in association with the variation in the rotating speed of the engine 210.

### (Function and effect of an electric vehicle according to an embodiment of the present invention)

In the electric vehicle 100 according to an embodiment of the present invention, the front part 213a of the crankshaft 213 serves as the rotor shaft of the generator 250, and the crankshaft 213 is disposed along the vehicle's longitudinal direction, which allows the engine 210 and the generator 250 to be disposed in series along the vehicle's longitudinal direction. Thus, the vertical dimension of the electric vehicle 100 can be reduced in comparison with the case where the engine 210 and the generator 250 are disposed vertically in piles. Accordingly, the undesirable appearance of the electric vehicle 100 resulted from the additional vertical dimension of the electric vehicle can be avoided.

Further, the driving stability of the electric vehicle 100 is improved, since the center of gravity for the electric vehicle 100 can be lowered in comparison with the case where the engine 210 and the generator 250 are disposed vertically in piles.

In addition, as the crankshaft 213 is disposed along the vehicle's longitudinal direction and the power unit 200 is disposed below the seat 120, the dimension of the electric vehicle 100 in its transverse direction is reduced in comparison with the case where the crankshaft 213 is disposed along the vehicle's transverse direction, and the operator can get on a saddle of the electric vehicle 100 more easily.

What is more, as the power unit 200 is supported by the pair of pillar members 115a on both outer sides in the vehicle' s transverse direction, the need for suspending the power unit 200 from above with the frame, or the need for supporting the power unit 200 from below with the frame is eliminated. Thus, the room above or below the power unit 200 can be utilized more effectively. In other words, some other unit constituting the electric vehicle 100 (the air cleaner 122, for instance) may be disposed above or below the power unit 200.

Further, since the bolt 173 is inserted through the bolt hole 260, the bolt hole 1154 on the upper rib 1151, and the bolt hole 1156 on the lower rib 1152, the pair of pillar members 115a firmly support the power unit 200 at the positions of the bolt holes 1154 and 1156 (two places on each pillar member 115a, which makes four places in all). Additionally, the line connecting the bolt holes 1154 and 1156 runs generally perpendicular to the crankshaft 213.

Thus, the pair of pillar members 115a can support the power unit 200, while effectively restricting the vibration of the engine 210 caused by the rotation of the crankshaft 213.

That is to say, the swaying of the power unit 200 in the longitudinal direction (pitching), and the swinging of the power unit 200 on the vehicle's transverse cross section (rolling) caused by the engine 210 turning the crankshaft can be restricted.

Further, as the distance between the bolt hole 1154 on the upper rib 1151 and the crankshaft 213 is generally equal to the distance between the bolt hole 1156 on the lower rib 1152 and the crankshaft 213, the pair of pillar members 115a can support the power unit 200, while maintaining the desirable balance.

Since the bolt hole 1154 on the upper rib 1151 and the bolt hole 1156 on the lower rib 1152 are located closely to the pillar member 115a, the pair of pillar members 115a can support the power unit 200 without causing damage to the upper rib 1151 or the lower rib 1152 by the loading of the power unit 200.

In addition, the vibration caused by the moment of inertia attributable to the rotation of the crankshaft 213 (crank) is restricted, since the cylinder 224 is disposed closely to one of the pair of bolt holes 260 on the power unit 200 corresponding to the bolt holes 1154 and 1156. Consequently, the vibration caused by the vertical motion of the piston 226 within the cylinder 224 can be restricted.

Further, the pair of bolt holes 260 corresponding to the bolt holes 1154 and 1156 are provided at the upper and lower ends of the crankcase, respectively. The power unit 200 is supported by the pair of pillar members 115a as the bolt 173 is inserted through each of the pair of bolt holes 260, and through each of the bolt holes 1154 and 1156.

That is, the vibration caused by the rotation of the crankshaft 213, which is the major contributing factor for the vibration of the power unit 200, can be restricted effectively by the pair of pillar members 115a supporting the power unit 200 at the upper and lower ends of the crankcase 230. Also, propagation of the vibration caused by the rotation of the crankshaft 213 to other units can be prohibited .

In addition, the vibration of the power unit 200 can be restricted effectively by the pair of pillar members 115a supporting the power unit 200 above and below the center of gravity of the power unit 200.

Further, since the intake port 217 and the exhaust port 219 have configuration that opens in the opposite direction with each other in the vehicle' s longitudinal direction, the intake system members connected to the intake port 217, which include the carburetor 220, and the exhaust system members connected to the exhaust port 219, which include the exhaust pipe 221, can be disposed in line with the vehicle's longitudinal direction. This allows the intake system members and the exhaust system members to be disposed without protrusion in the vehicle's transverse direction, enabling the downsizing of the electric vehicle 100 in its transverse direction.

In addition, as the carburetor 220 connected to the intake port 217 is disposed above the generator 250 and ahead of the intake port 217, the carburetor 220 can be disposed without protruding in the vehicle's transverse direction. Further, as the carburetor 220 is disposed generally in the central part of the engine 210 in the vehicle's transverse direction, the air-fuel mixture can be supplied into the cylinder 224 in the stable condition without being affected by the vibration of the engine 210 in the vehicle's transverse direction.

In addition, since the rear wheel 140 is rotated by the motor 150, only the distribution cable connecting the battery 170 and the control unit 180 to the motor 150 has to be disposed inside of the swing arm 160, which eliminates the need for providing the transmission mechanism (shafts, belts, and others) for connecting the crankshaft 213 of the engine 210 to the axle of the rear wheel 140 inside of the swing arm 160. Thus, the swing arm 160 can be downsized in the vehicle's transverse direction.

### (Other embodiments)

In the embodiment described above, the power unit 200 is disposed between the pair of pillar members115a for supporting the seat 120, and is supported by the upper rib 1151 and the lower rib 1152 of the pillar member 115a. However, the present invention is not limited to this configuration. The power unit 200 may be disposed ahead of the rear wheel 140 to be supported by the frame extending in the vehicle's vertical direction (the frame not supporting the seat 120).

Also, the electric vehicle 100 is an electric motorcycle according to the embodiment described above, but the present invention is not limited to the electric motor cycle. It can be any type of vehicle so long as its rear wheel 140 is rotated by the motor 150. The electric vehicle 100 may be an electric three-wheel vehicle or an electric four-wheel vehicle, for instance.

Further, in the embodiment described above, the rear wheel 140 is the driving wheel. However, the present invention is not limited in this regard. The driving wheel may be the front wheel.

Thus, it should be understood that the present invention covers various embodiments which are not described in this specification. Consequently, the technical scope of this invention can be determined only by the particular matter of the invention according to the appropriate claims based on the aforementioned description.

### [Industrial Applicability]

As described above, the electric vehicle according to the present invention has advantages that the influence of the pitching and rolling can be restricted regardless of the engine mounted on it, and that the electric vehicle can be downsized in its transverse direction. It is therefore useful as the electric vehicle, namely, a hybrid type vehicle in which the electric power produced by the engine is supplied to the motor for rotating the driving wheel.

## Claims

1. An electric vehicle provided with: a power unit that integrally has an engine with a crankshaft extending along the longitudinal direction of the vehicle body together with a generator that shares the crankshaft with the engine for its rotation axis to supply electric power generated by the rotation of the crankshaft to a motor; and a pair of frame parts disposed on both outer sides of the power unit in the vehicle's transverse direction, wherein each frame part supports the power unit at the first supporting point located higher than the crankshaft, and at the second supporting point located lower than the crankshaft, and the line connecting the first and second supporting points runs generally perpendicular to the crankshaft.

2. The electric vehicle according to Claim 1, wherein the distance between the first supporting point and the crankshaft is generally equal to the distance between the second supporting point and the crankshaft.

3. The electric vehicle according to Claim 1, wherein each frame part has an upright frame portion extending in the vehicle's vertical direction, and the first and second supporting points are located closely to the upright frame portion.

4. The electric vehicle according to Claim 1, wherein the engine further has a cylinder, and the cylinder is disposed closely to the first or second supporting point.

5. The electric vehicle according to Claim 1, wherein the power unit further has a crankcase accommodating at least the crankshaft, and the frame part supports the upper end of the crankcase at the first supporting point, while supporting the lower end of the crankcase at the second supporting point.

6. The electric vehicle according to Claim 1, wherein a seat is further provided for the operator of the electric vehicle to sit on, and the seat is disposed on the upper part of the frame part.

7. The electric vehicle according to Claim 1, wherein the engine further has a cylinder head on which an intake port and an exhaust port are provided, and the intake port and the exhaust port provided on the cylinder head are aligned in the vehicle's longitudinal direction.
